# EUROPEAN PATENT APPLICATION

(11) **EP 4 830 502 A1**
(43) Date of publication of application: **28.10.2026**
(21) Application number: 24905217.6
(22) Date of filing: 18.12.2024
(51) Int. Cl.: A01C 15/00, A01C 7/06

(54) **METHOD AND SYSTEM FOR PLANTING GRAIN**

(30) Priority: 19.12.2023 BR 102023026874
(71) Applicant: Brant Carvalho Filho, Felisberto, 04536-001 São Paulo (BR)
(72) Inventor: Brant Carvalho Filho, Felisberto, 04536-001 São Paulo (BR)
(74) Representative: Høiberg P/S
(86) International application number: PCT/BR2024/050589
(87) International publication number: WO 2025/129309

(57) **Abstract**

The invention relates to a method and system for planting grains, which utilizes the direct planting technique, comprising the steps of opening a furrow in the soil, fertilization, and sowing. The furrower uses a subsoiler rod fixed to an agricultural sowing implement, adjusted so that its end penetrates 20 to 40 cm into the soil, at a speed of 4.5 km/h to 6 km/h. The furrow opening and fertilization are simultaneously performed by means of a furrower (1) that integrates, in the same unit, means of decompaction (2,3) and means of fertilization (5,7) by means of the application of granular fertilizer and by the fact that sowing is performed after said fertilization, by means of a dispensing nozzle (43) placed at the rear of said furrower (1).

## Description

### Technical Field

This method and system refer to the field of agriculture and, more specifically, to grain planting using the direct planting technique.

### Background Art

Direct planting is a sowing technique aimed at reducing cultivation costs, in which the seed is placed in undisturbed soil (without prior plowing or light leveling harrowing) using special seeders. Thus, straw, branches, and leaves, for example, remain in soil and over the same residues of the last crop. In this way, the soil is better protected from moisture loss and results in improved quantity and quality of soil organic matter (SOM) compared to other management methods.

In directing planting, the soil is usually highly compacted due to previous cultivation and is also deficient in nutrients. Therefore, methods have been developed that use implements which, in addition to planting, perform soil decompaction and fertilization.

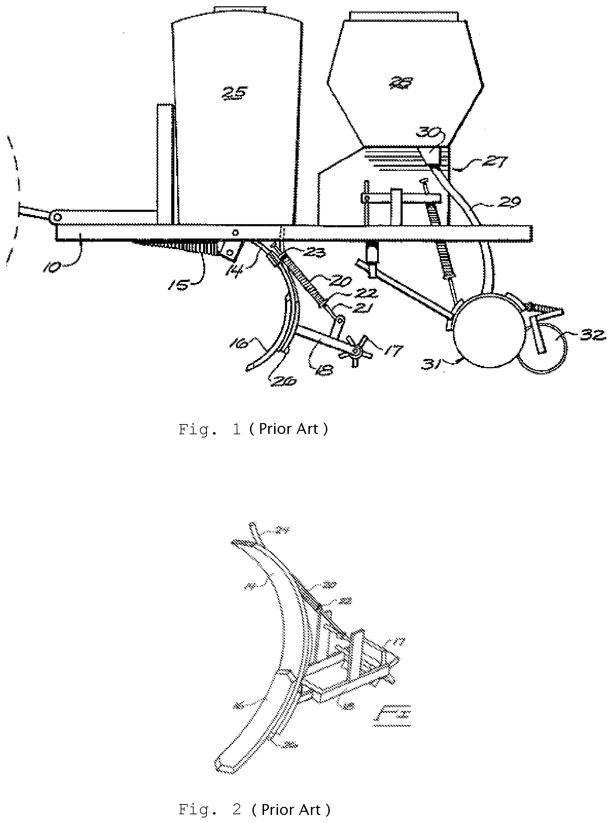

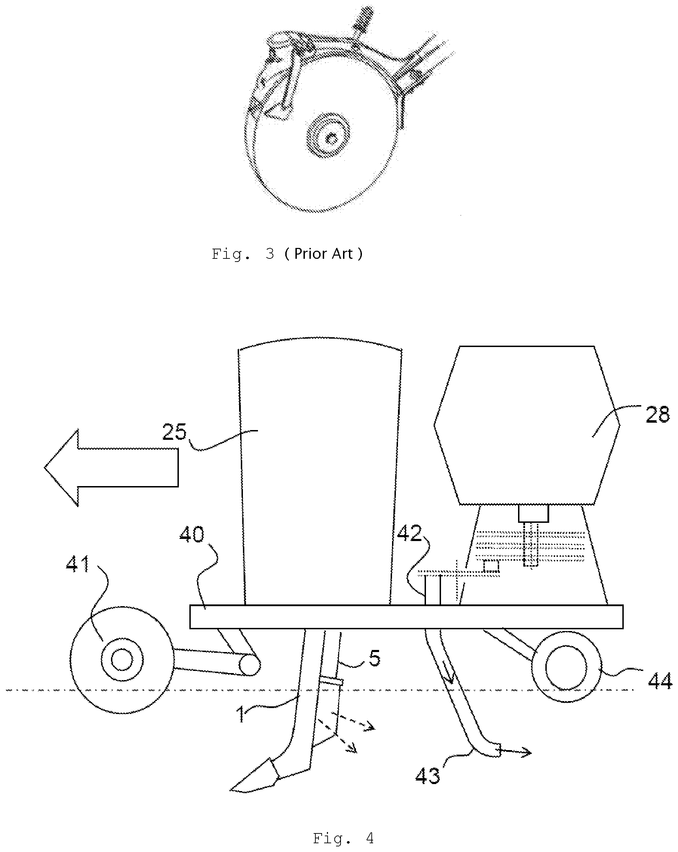

One of these implements is described in patent document US4244306 entitled *MINIMUM TILLAGE PLANTER* and illustrated in Fig. 1. This implement comprises a subsoiler shank 14, 16 that digs a furrow; a roller 17 equipped with blades that break up the clods of earth brought to the surface. Along the rear face of the shank runs a pipe 24 for liquid fertilizer that is applied to the furrow through the outlet 26. This liquid fertilizer is applied to the bottom of the furrow opened by the shank and is partially covered by the soil broken up by the roller 17. Because the furrow is partially clogged by said broken-up soil, it becomes necessary to widen it, a function performed by the double-disc widener 31, illustrated in detail in Fig. 3.

As shown in this figure, this widener comprises two discs placed at an angle, to form a "wedge" that separates the walls of the furrow, allowing the application of seeds from reservoir 28 and drop tube 29. Finally, the furrow is closed by roller 32.

Such implement presents several drawbacks, the first of which is that the fertilizer goes to the bottom of the furrow, that is, just above the compacted soil, making it subject to leaching and dilution by rainwater and consequent dragging of the fertilizer to the compacted soil region below the bottom of the furrow. As a result, the roots do not fully use this fertilizer due to the difficulty of the roots to penetrate the compacted soil.

Another drawback is that, due to the widening of the furrow produced by the double-disc widener, the seeds may stop at the bottom of the furrow, being damaged by contact with the concentrated liquid fertilizer.

### Objectives of the Invention

In view of the above mentioned, the present invention has the objective of providing a direct planting method that allows for better use of fertilizer by distributing it diffusely rather than at a single depth.

Another objective of the method is to avoid direct contact between the seeds and the concentrated fertilizer, to not damage the seeds.

### Brief Description of the Invention

The above objectives, as well as others, are achieved by the invention by providing a method comprising the steps of opening a furrow in the soil, fertilizing the soil and seeding the soil, where the opening of the furrow and the fertilization are simultaneously performed by means of a furrower that integrates decompaction means and fertilizer application means in the same unit.

According to another embodiment of the invention, fertilization is performed with granulated fertilizer.

According to another embodiment of the invention, the granulated fertilizer is distributed at several depths within the furrow.

According to another embodiment of the invention, the groove depth varies between 20 cm and 40 cm.

According to another embodiment of the invention, seeding is performed by scattering the seeds in the furrow after it has been opened and fertilized.

According to another embodiment of the invention, the furrow is closed immediately after the seeds are scattered.

According to another embodiment of the invention, an implement pulled by a tractor is provided, wherein said implement comprises a furrower device, a fertilizing device and a seeding device installed on the same chassis, wherein the furrower device and the fertilizing device are arranged on the same support.

According to another embodiment of the invention, said support has the form of an arm in which end the furrower device is attached and in the rear edge the fertilizing device is installed.

According to another embodiment of the invention, a furrow closing member is provided, placed immediately after the seeding device, which is placed separately at the rear of the furrower/fertilizing device, where said closing member has the function of closing the furrow after the seed is scattered by the seeding device.

According to another embodiment of the invention, the closing of the furrow by the closing member keeps the seeds at the correct depth at which they were scattered.

### Description of drawings

The characteristics and advantages of the proposed model will be more evident from its detailed description and the figures that refer to it, in which:
Fig. 1 shows a prior art subsoiler-fertilizer-planter implement.
Fig. 2 is a detail of the subsoiler of the implement from the previous figure.
Fig. 3 is a view of the double disc widener of the implement shown in Fig 1.
Fig. 4 shows the assembly consisting of the furrower, fertilizer applicator, and seeder arranged on the same chassis.

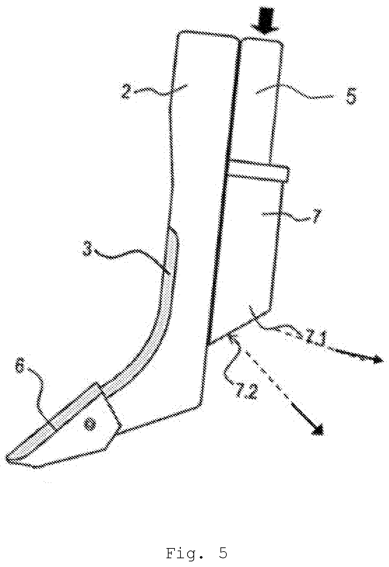

Fig. 5 details the subsoiler/fertilizer applicator used in the invention.

### Detailed description

The direct planting method of the invention uses a furrower comprising a subsoiler shank, fixed to an agricultural seeding implement, adjusted so that its end penetrates 20 to 40 cm into the soil. This depth requires greater traction effort, leading to the adoption of a lower gear in the tractor, so as not to strain the engine, resulting in a speed of 4.5 km/h to 6 km/h.

This greater penetration into the soil provides deeper decompaction, generating better conditions for the longitudinal growth of roots, which results in a greater capacity for fertilizer absorption as it is dispersed at several depths, allowing for better nutrient absorption, greater resistance to water stress, and a substantial increase in productivity.

As mentioned above, soil decompaction is performed simultaneously with fertilization. For this purpose, a fertilizer distribution device 7 is provided, placed on the rod 2 next to the working edge 3, comprising two parallel side plates 7.1 with the gap between them accommodating the granular fertilizer duct. In the lower region of this gap, an angled plate (not seen in the figure) is fixed between 30 and 60 degrees, which alters the trajectory of the fertilizer grains that are freely falling inside the duct 5: in this way, the fertilizer is distributed in a fan pattern, symbolized by the dashed arrows, at different depths, starting 5 cm from the bottom of the furrow.

Thus, even if leaching occurs due to rainwater, there are at least 5 cm of uncompacted soil where the plant can still benefit from the fertilizer through root growth, which is not possible when the fertilizer settles in compacted soil at the bottom of the furrow. In this way, the plant's root has access to the fertilizer throughout its growth.

A flexible pipe (not shown in Fig. 4) carries the granular fertilizer from a reservoir 25, introducing the grains into the duct 5 as indicated by the arrow.

As shown in Fig. 4, the seed applicator comprises the drop tube 42 and the launching nozzle 43, which is placed at the rear of the furrower/fertilizer applicator. The seeds are scattered at the appropriate depth for the type of crop, remaining at that depth due to the immediate approximation of the furrow's side walls because of its closure by the furrow closing member 44 placed immediately after said launching nozzle.

The furrow closing member 44 is a known device in the prior art, which may comprise one or two wheels supported on the ground.

The invention has been described by referring to an exemplary embodiment and may undergo modifications provided that it remains within the basic inventive concept. Thus, for example, the step of cutting the straw (residue from the previous harvest) may be added by means of a disc 41 positioned placed ahead of the furrower without this altering the nature of the invention, which is delimited and defined by the set of the following claims.

## Claims

1. **GRAIN PLANTING METHOD** using the direct planting technique, comprising the steps of opening a furrow in the soil, fertilizing the soil and sowing, wherein said furrow opening and fertilization are simultaneously performed by means of a furrower (1) that integrates, in the same unit, means of decompaction (2, 3) and means of fertilization (5, 7) by means of the application of granulated fertilizer and by the fact that sowing is performed after said fertilization, by means of a dispensing nozzle (43) positioned at the rear of said furrower (1).

2. **GRAIN PLANTING METHOD** according to claim 1, wherein granular fertilizer is distributed at different depths, starting 5 cm from the bottom of the furrow.

3. **GRAIN PLANTING METHOD** according to claim 1, wherein said furrow has a depth between 20 cm and 40 cm.

4. **GRAIN PLANTING METHOD** according to claim 1, wherein the furrow walls are vertical.

5. **GRAIN PLANTING METHOD** according to claim 4, wherein seeds, scattered into the furrow by said dispensing nozzle (43), remain at the scattered depth.

6. **GRAIN PLANTING METHOD** according to claim 5, wherein seeds remain at the depth at which they were scattered by the immediate closing of the furrow by means of a closing device (44) placed immediately after said scattering nozzle (43).

7. **GRAIN PLANTING METHOD** according to any of the preceding claims, wherein the travel speed of the furrower (1) is between 4.45 km/h and 6 km/h.

8. **GRAIN PLANTING SYSTEM** using the direct planting technique, using an implement comprising a furrower (1), a fertilizer device (5, 7) and a seeding device (28, 42, 43) arranged on the same chassis (40), towed by a tractor, wherein the furrower device (3, 6) and the fertilizer device (5, 7) are arranged on the same support (2).

9. **GRAIN PLANTING SYSTEM** according to claim 8, wherein said seeding device comprises a seed outlet nozzle (43) placed at the rear of said furrower and fertilizing device (1), as well as a furrow closing element (44).

10. **GRAIN PLANTING SYSTEM** according to any one of claims 8 or 9, wherein further comprises a straw cutting disc (41) placed in front of said furrower and fertilizer device (1).
